# FASCICULE DE BREVET EUROPEEN

(11) **EP 3 143 595 B1**
(45) Date de publication et mention de la délivrance du brevet: **06.01.2021**
(21) Numéro de dépôt: 15715353.7
(22) Date de dépôt: 19.03.2015
(51) Int. Cl.: G06T 11/60

(54) **PROCÉDÉ D'AFFICHAGE D'IMAGES**
VERFAHREN ZUM ANZEIGEN VON BILDERN
METHOD OF DISPLAYING IMAGES

(30) Priorité: 12.05.2014 FR 1454217
(43) Date de publication de la demande: 22.03.2017
(73) Titulaire: Idemia Identity & Security France, 92400 Courbevoie (FR)
(72) Inventeur: THUILLIER, Cédric, 92130 Issy Les Moulineaux (FR); KAZDAGHLI, Laurent, 92130 Issy Les Moulineaux (FR); BRONSART, Sébastien, 92130 Issy Les Moulineaux (FR)
(74) Mandataire: Regimbeau
(86) Numéro de dépôt international: PCT/FR2015/050683
(87) Numéro de publication internationale: WO 2015/173482

(56) Documents cités:
- "DxO FilmPack 4 User Guide", , 1 janvier 2013 (2013-01-01), pages 1-43, XP055162565, Extrait de l'Internet: URL:support.dxo.com/attachments/token/wgli lb6xhcxptns/?name=DxO_FilmPack_4.5_User_Gu ide_Win_Mac.pdf [extrait le 2015-01-15]
- Unique Photo Youtube: "DxO FilmPack 4 Demonstration", , 12 novembre 2013 (2013-11-12), XP054975688, Extrait de l'Internet: URL:https://www.youtube.com/watch?v=xbVCna ktSBU [extrait le 2015-01-22]
- Chimpytech: "Word 2010 Live Preview Explained", , 21 octobre 2012 (2012-10-21), XP055162520, Extrait de l'Internet: URL:http://www.chimpytech.com/word-2010-li ve-preview-explained/ [extrait le 2015-01-15]
- HSIANG-TING CHEN ET AL: "Nonlinear revision control for images", ACM SIGGRAPH 2011 PAPERS ON, SIGGRAPH '11, 1 janvier 2011 (2011-01-01), page 1, XP055162642, New York, New York, USA DOI: 10.1145/1964921.1965000 ISBN: 978-1-45-030943-1
- W. KEITH EDWARDS ET AL: "Timewarp", PROCEEDINGS OF THE SIGCHI CONFERENCE ON HUMAN FACTORS IN COMPUTING SYSTEMS , CHI '97, 1 janvier 1997 (1997-01-01), pages 218-225, XP055162665, New York, New York, USA DOI: 10.1145/258549.258710 ISBN: 978-0-89-791802-2

## Description

### DOMAINE TECHNIQUE GENERAL

L'invention concerne le domaine du traitement d'image, et plus précisément un procédé d'affichage d'image permettant la sélection et l'application à une image d'une pluralité de traitements.

### ETAT DE LA TECHNIQUE

Dans le domaine de la biométrie de nombreux procédés utilisent des algorithmes de reconnaissance de forme ou d'image, par exemple afin de reconnaitre une empreinte digitale ou un visage dans une image. Les images soumises à de tels algorithmes de reconnaissance ne présentent souvent pas une qualité optimale. Il est donc souvent nécessaire de prévoir l'utilisation de séries de traitements d'image afin de modifier l'image traitée, de façon à améliorer la précision de la reconnaissance d'empreinte ou de visage dans cette image. Le traitement à appliquer peut varier d'une série d'images à une autre, par exemple en fonction des conditions de prise de vue. Il est donc nécessaire de sélectionner pour chaque image ou série d'images un ou plusieurs traitements adaptés.

La plupart des outils existants permettant la sélection et l'application de tels traitements proposent à un utilisateur différents algorithmes de traitement prédéfinis. L'utilisateur peut appliquer un de ces traitements sur une image et si ce traitement lui semble ne pas convenir, l'utilisateur peut annuler ce traitement et en sélectionner un autre. Pour ce faire, l'utilisateur doit généralement effectuer une action pour sélectionner un traitement à appliquer, une deuxième action pour annuler l'application de ce traitement, puis une troisième action pour sélectionner un nouveau traitement etc...

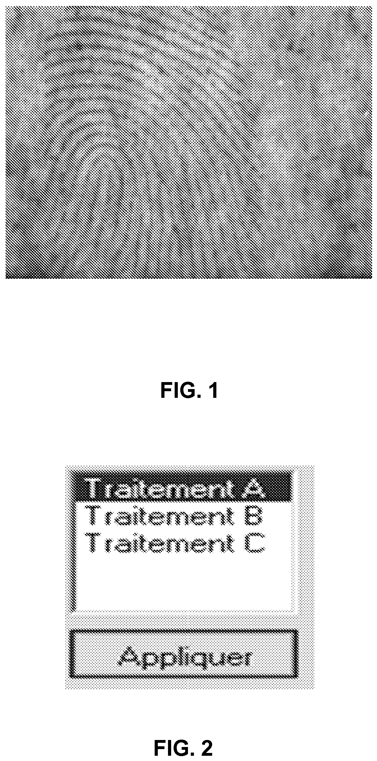

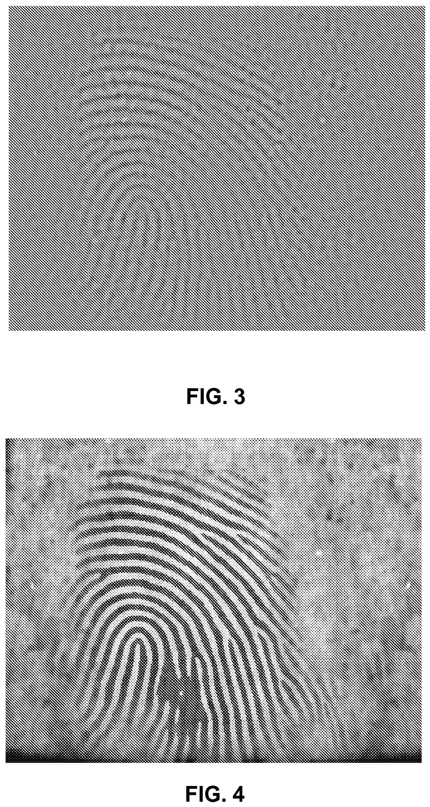

A titre d'exemple, voulant modifier l'image représentée en **figure 1****,** l'utilisateur peut utiliser une liste statique, telle que celle représentée en **figure 2** pour sélectionner un traitement. L'application de ce traitement à l'image représentée en figure 1 entraîne l'affichage de l'image représentée en **figure** 3. Si le résultat ne lui convient pas, l'utilisateur peut annuler l'application du traitement. L'image représentée en figure 1 est alors de nouveau affichée et l'utilisateur peut sélectionner un nouveau traitement à l'aide de la liste représentée en figure 2, entraînant l'affichage de l'image représentée en **figure 4****.**

De telles solutions nécessitent ainsi un grand nombre d'opérations de la part de l'utilisateur pour comparer plusieurs traitements entre eux et sélectionner un traitement adapté parmi les nombreux traitements proposés.

De plus, de telles solutions sont mal adaptées à la sélection d'une combinaison de plusieurs algorithmes de traitement à appliquer conjointement à une même image. Elles nécessitent en effet de l'utilisateur une bonne connaissance des traitements proposés et une multitude d'opérations pour sélectionner un à un les différents traitements à appliquer, et ce pour chaque image Le logiciel DxO FilmPack 4 est un exemple d'outil existant.

Il existe donc un besoin d'un procédé d'affichage d'images permettant à un utilisateur de comparer facilement plusieurs traitements possibles, de sélectionner un ou plusieurs traitements à appliquer en un nombre réduit d'opérations et d'appliquer une série de traitements sélectionnée à une ou plusieurs images à traiter.

### PRESENTATION DE L'INVENTION

La présente invention se rapporte ainsi selon un premier aspect à un procédé d'affichage d'images comme défini dans la revendication 1.

Un tel procédé permet à l'utilisateur d'obtenir facilement un aperçu des effets des traitements proposés et de comparer deux effets en un nombre minimum d'opérations. Un tel graphe permet de déterminer facilement quels algorithmes de traitement ont été appliqués à une première image pour obtenir une deuxième image et quelles images peuvent être obtenues à partir d'une image courante à traiter en considérant un certain nombre de traitements possibles. Ce procédé permet de plus à l'utilisateur de disposer d'une prévisualisation de l'effet d'un traitement avant de le sélectionner sans avoir à effectuer d'action supplémentaire et donc de sélectionner un traitement à appliquer en un nombre minimal d'opérations.

L'affichage d'au moins une deuxième image sur ledit système d'affichage, peut comprendre préalablement une étape de détermination desdites deuxièmes images à afficher sur ledit système d'affichage.

Une telle étape permet de n'afficher que les deuxièmes images relatives aux traitements les plus pertinents pour l'utilisateur.

A titre de premier exemple, lesdites deuxièmes images à afficher sont déterminées en fonction de préférences utilisateurs et/ou à partir d'un historique des algorithmes de traitement d'image utilisés précédemment.

Les traitements les plus pertinents pour l'utilisateur sont ainsi déterminés à partir des actions passées de l'utilisateur de manière à être bien adaptés aux images usuellement traitées par l'utilisateur. L'utilisateur peut ainsi également mémoriser une série de traitements favoris qu'il désire appliquer de manière répétée à plusieurs images.

A titre de deuxième exemple, lesdites deuxièmes images à afficher sont déterminées en calculant un ensemble de deuxièmes images obtenues par application à ladite première image d'au moins un algorithme de traitement d'images et en sélectionnant des deuxièmes images parmi l'ensemble des deuxièmes images calculées en fonction des différences entre ces images calculées et, entre ces images calculées et la première image.

Ceci permet de proposer à l'utilisateur uniquement des traitements ayant un effet bien visible sur l'image traitée ou bien uniquement des traitements ayant des effets bien différenciés entre eux, évitant ainsi de proposer à l'utilisateur deux traitements ayant des effets similaires.

Dans une première variante de mise en oeuvre, ledit procédé d'affichage selon le premier aspect peut comprendre en outre, la sélection par l'utilisateur du système d'affichage d'une première zone de sélection dans la première image, chaque deuxième image affichée dans une desdites deuxièmes zones d'affichage étant obtenue par application à la première zone de sélection de la première image d'au moins un algorithme de traitement d'image.

Une telle sélection permet à l'utilisateur de définir une zone d'intérêt particulière de l'image et de visualiser l'effet des algorithmes de traitement proposés sur cette zone dès l'affichage des deuxièmes images.

Dans une deuxième variante de mise en œuvre, ledit procédé d'affichage selon le premier aspect peut comprendre en outre, la sélection par l'utilisateur du système d'affichage d'une deuxième zone de sélection dans la première zone d'affichage, et l'au moins un algorithme de traitement appliqué pour obtenir la deuxième image survolée est appliqué à la première image dans la deuxième zone de sélection de la première zone d'affichage.

Ainsi l'utilisateur peut visualiser l'effet de plusieurs traitements appliqués chacun à une sous-partie distincte de l'image.

Par ailleurs, une transformation appliquée à la première image par un utilisateur du système d'affichage peut également être appliquée à chaque deuxième image affichée dans une desdites deuxièmes zones d'affichage.

L'utilisateur peut ainsi mieux se rendre compte de l'effet des traitements proposés sur une partie de la première image.

A titre de premier exemple, ladite transformation peut comprendre un zoom dans la première image.

Ceci permet à l'utilisateur d'agrandir un détail intéressant de la première image et de se rendre compte de l'effet des traitements proposés sur ce détail.

A titre de deuxième exemple, ladite première image étant une sous-partie d'une image d'origine, ladite transformation peut comprendre une translation de la sous partie de l'image d'origine affichée comme première image.

Ceci permet à l'utilisateur de tester successivement les effets des traitements proposés sur différents détails de l'image d'origine.

Selon un deuxième aspect, l'invention concerne un produit programme d'ordinateur comprenant des instructions de code de programme pour l'exécution des étapes du procédé d'affichage selon le premier aspect lorsque ledit programme est exécuté sur un ordinateur.

Selon un troisième aspect, l'invention concerne un module de traitement de données configuré pour exécuter les étapes de procédé selon le premier aspect.

Selon un quatrième aspect, l'invention concerne un système d'affichage comprenant un module de traitement de données selon le troisième aspect et au moins un système d'affichage.

De tels produit programme d'ordinateur, module de traitement et système d'affichage présentent les mêmes avantages que ceux évoqués pour le procédé selon le premier aspect.

### PRESENTATION DES FIGURES

D'autres caractéristiques et avantages de la présente invention apparaîtront à la lecture de la description qui va suivre d'un mode de réalisation de l'invention. Cette description sera donnée en référence aux dessins annexés dans lesquels :
- la figure 1 représente l'affichage d'une image à traiter;
- la figure 2 illustre une liste permettant de sélectionner un traitement à appliquer à l'image affichée en figure 1 conformément à l'état de la technique;
- la figure 3 illustre l'affichage de l'image traitée générée en appliquant un premier traitement sélectionné à la figure 2 à l'image à traiter affichée en figure 1 ;
- la figure 4 illustre l'affichage de l'image traitée générée en appliquant un deuxième traitement sélectionné à la figure 2 à l'image à traiter affichée en figure 1 ;
- la figure 5 illustre l'affichage sur un système d'affichage d'une première image dans une première zone d'affichage et de plusieurs deuxièmes images dans des deuxièmes zones d'affichage selon un mode de mise en oeuvre de l'invention;
- la figure 6 illustre l'effet d'un survol d'une desdites deuxièmes zones d'affichage selon un mode de mise en oeuvre de l'invention;
- la figure 7 illustre un autre exemple d'ordonnancement des deuxièmes images sur le système d'affichage selon un mode de mise en oeuvre de l'invention;
- la figure 8 représente un graphe utilisé pour une mise en oeuvre du procédé selon l'invention ;
- la figure 9 est un diagramme schématisant une mise en œuvre d'un procédé d'affichage d'images selon l'invention.

### DESCRIPTION DETAILLEE

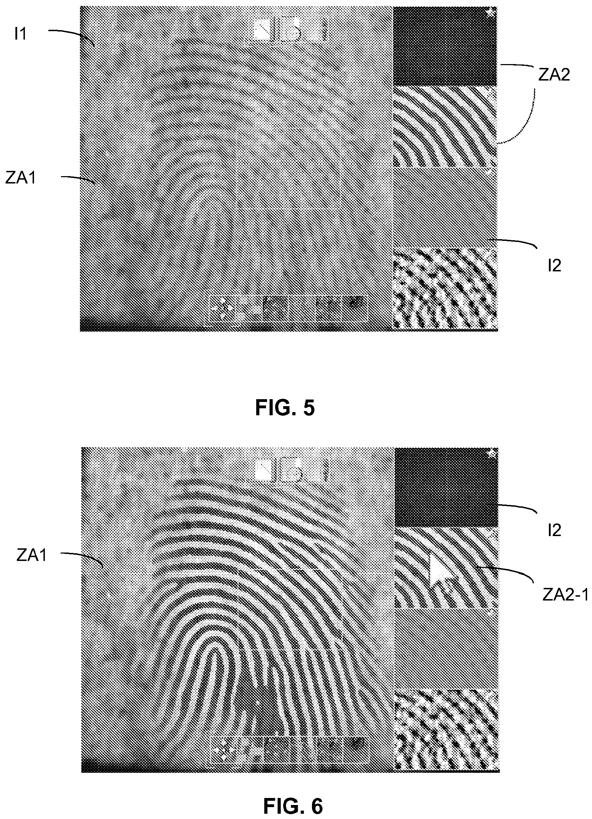

Un mode de réalisation de l'invention concerne un système d'affichage comprenant un module de traitement de données et au moins un système d'affichage auquel le module de traitement est connecté. Comme représenté en **figure** 5, le système d'affichage comprend au moins deux zones d'affichage : une première zone d'affichage ZA1 et une ou plusieurs deuxièmes zones d'affichage ZA2.

La première zone ZA1 est utilisée pour afficher une première image I1 que l'utilisateur souhaite traiter par un ou plusieurs algorithmes de traitement d'image. Dans les paragraphes suivants, le terme « traitement » sera utilisé pour dénommer l'application à une image d'un algorithme de traitement ou d'une série d'algorithmes de traitement.

Selon l'exemple représenté en figure 5, la première image I1 peut être par exemple une photographie d'une empreinte digitale que l'utilisateur souhaite traiter afin d'identifier les points caractéristiques de cette empreinte, pour, par exemple, la comparer à une base de données d'empreintes.

Chaque deuxième zone ZA2 peut être utilisée pour proposer à l'utilisateur un traitement parmi une pluralité de traitements disponibles pouvant être appliqués par le module de traitement à la première image I1. Pour cela, dans chaque deuxième zone ZA2 peut être affichée une deuxième image I2 obtenue en appliquant à au moins une partie de la première image un traitement, c'est-à-dire une série d'un ou plusieurs algorithmes de traitement.

Chaque deuxième zone ZA2 peut également être utilisée par l'utilisateur comme élément de contrôle de façon à prévisualiser le résultat de l'application à la première image I1 du traitement utilisé pour obtenir la deuxième image I2 affichée dans ladite deuxième zone ZA2, dit traitement relatif à la deuxième image, et à sélectionner ce traitement si le résultat lui convient. Pour cela, le résultat de l'application à la première image I1 du traitement relatif à la deuxième image I2 affichée dans ladite deuxième zone ZA2 est affiché dans une partie de la première zone d'affichage ZA1 lorsque l'utilisateur survole la deuxième zone ZA2 avec un pointeur tel qu'un pointeur de souris. Cette prévisualisation est maintenue tant que le pointeur est maintenu sur cette deuxième zone d'affichage ZA2.

A titre d'illustration, la **figure 6** représente l'effet du survol de la deuxième zone d'affichage ZA2-1. Le traitement relatif à la deuxième image affichée dans la deuxième zone ZA2-1 est appliqué à la première zone d'affichage ZA1.

Si l'utilisateur veut prévisualiser le résultat d'un autre traitement d'image, il lui suffit de glisser le pointeur sur une autre deuxième zone d'affichage. Le traitement relatif à la deuxième image affichée dans cette autre deuxième zone d'affichage sera alors appliqué à la première zone d'affichage ZA1. L'utilisateur peut ainsi prévisualiser très simplement l'effet de différents traitements, sans avoir à mettre en oeuvre de nombreuses opérations pour passer d'un traitement à un autre. Le déplacement du pointeur d'une deuxième zone d'affichage à une autre permet de remplacer directement une prévisualisation par une autre, sans repasser par un affichage de la première image non modifiée I1. Il est ainsi également beaucoup plus facile pour l'utilisateur de comparer l'effet d'un traitement à celui d'un autre, et de sélectionner le traitement le plus adapté.

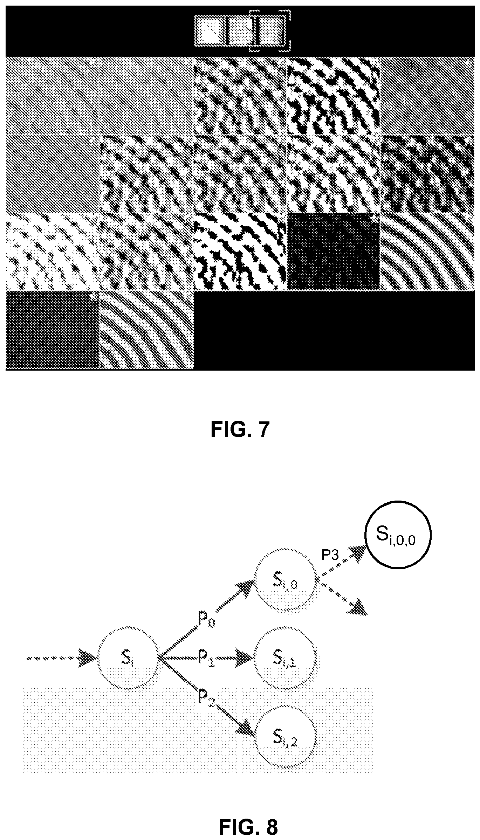

Dans un mode de réalisation représenté en **figure 7** le module de traitement peut afficher sur le système d'affichage uniquement des deuxièmes zones d'affichage de façon à afficher un plus grand nombre de deuxièmes images et à proposer ainsi à l'utilisateur un plus grand nombre de traitements. La première image n'est alors temporairement plus affichée sur le système d'affichage.

Lorsque l'utilisateur a déterminé le traitement qu'il souhaite appliquer de manière permanente à la première image I1, la deuxième zone d'affichage correspondante peut être utilisée comme élément de contrôle pour appliquer ce traitement à la première image I1. Pour sélectionner un traitement, l'utilisateur peut par exemple cliquer avec le pointeur sur la deuxième zone d'affichage correspondante.

A titre d'illustration, la **figure 4** représente l'effet d'une sélection de la deuxième zone d'affichage ZA2-1 de la figure 6. L'algorithme de traitement relatif à la deuxième image affichée dans la deuxième zone ZA2-1 est appliqué de manière permanente à la première zone d'affichage ZA1.

Pour réaliser un tel affichage, le module de traitement utilise un modèle de données implémenté sous forme d'un graphe dont chaque état correspond à une image et chaque transition entre un premier état correspondant à une première image et un deuxième état correspondant à une deuxième image représente un algorithme de traitement d'image à appliquer à la première image pour obtenir la deuxième image, tel que représenté en **figure 8****.**

L'état du graphe correspondant à une première image I1 affichée dans la première zone d'affichage ZA1 est appelé état courant. A titre d'exemple cet état est appelé état Si sur la figure 8. A partir de cet état courant, le module de traitement peut calculer chaque image obtenue par application d'un traitement. Par exemple, l'image associée à l'état S_{i,1} est calculée en appliquant à la première image associé à l'état courant Si l'algorithme de traitement associé à la transition P1. De même l'image associée à l'état S_{i,0,0} peut être calculée en appliquant à la première image associé à l'état courant Si le traitement approprié, c'est-à-dire en appliquant successivement l'algorithme de traitement associé à la transition PO puis celui associé à la transition P3. Ainsi l'ensemble des états fils de l'état courant représente l'ensemble des images pouvant être obtenues par l'application d'un traitement, correspondant à une série d'un ou plusieurs algorithmes de traitements, à la première image associé à l'état courant Si. Chaque deuxième zone d'affichage ZA2 est utilisée pour afficher tout ou partie d'une image correspondant à un état fils de l'état courant.

Lorsque l'utilisateur sélectionne une deuxième zone d'affichage, c'est-à-dire le traitement relatif à la deuxième image affichée dans cette zone d'affichage, par exemple en cliquant sur cette deuxième zone d'affichage, ce traitement est appliqué à la première image. Ce traitement correspond à une ou plusieurs transitions dans le graphe menant de l'état courant à celui de ses états fils correspondant à l'image, dite image sélectionnée, dont au moins une partie est affichée dans la deuxième zone sélectionnée. Une fois le traitement sélectionné par l'utilisateur, l'image sélectionnée correspondant à cet état fils est affichée au moins en partie dans la première zone d'affichage et cet état fils devient l'état courant.

Les transitions du graphe peuvent être bidirectionnelles, c'est-à-dire parcourues dans les deux sens. Il est alors possible de remonter dans le graphe, c'est-à-dire d'annuler l'application d'un algorithme de traitement à une image correspondant à un état donné pour retrouver l'image correspondant à l'état père de cet état. Par exemple, partant de l'image associée à l'état S_{i,0}, l'algorithme de traitement peut annuler l'application de l'algorithme PO pour retrouver l'image associée à l'état S_{i.}

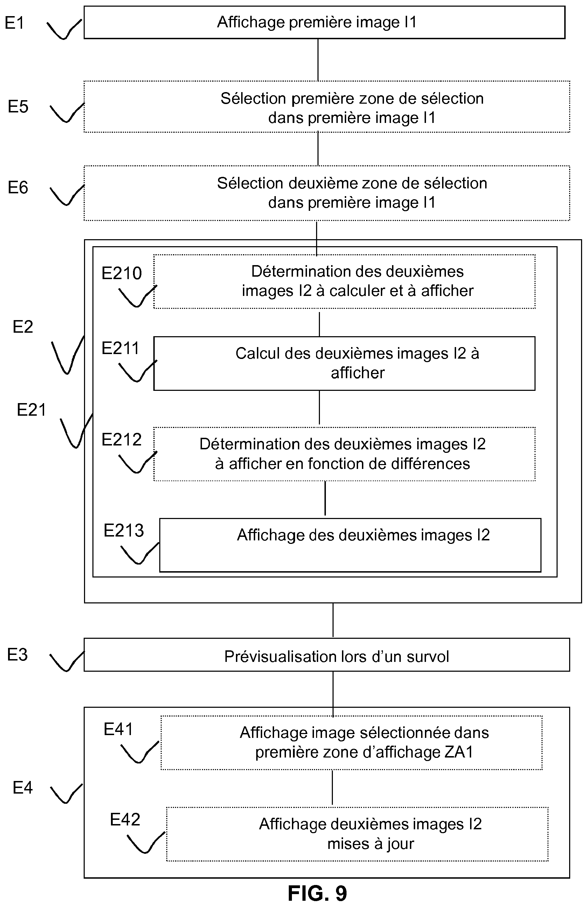

En référence à la **figure** 9, un mode de mise en oeuvre de l'invention concerne un procédé d'affichage d'images mis en oeuvre par le module de traitement de données comprenant les étapes décrites dans les paragraphes suivants.

Lors d'une première étape d'affichage E1, une première image I1 est affichée dans la première zone d'affichage ZA1.

Lors d'une deuxième étape d'affichage E2, au moins une deuxième image I2 obtenue par application à au moins une partie de la première image I1 d'un traitement d'image est affichée, chaque deuxième image I2 étant affichée dans une deuxième zone d'affichage ZA2.

Chacune de ces images correspond à un état du graphe ou est une partie d'une image correspondant à un état du graphe.

Lors d'une étape de prévisualisation E3, tant qu'une desdites deuxièmes zones ZA2 affichant une desdites deuxièmes images I2 est survolée par un pointeur, le module de traitement affiche, dans tout ou partie de la première zone d'affichage ZA1, au moins une partie de la première image I1 à laquelle est appliqué le traitement relatif à la deuxième image survolée.

L'utilisateur visualise ainsi l'effet sur au moins une partie de la première image du traitement relatif à la seconde image que l'utilisateur a choisi de survoler.

La deuxième étape d'affichage d'au moins une deuxième image E2 peut comprendre une étape d'affichage de deuxièmes images relativement à un état courant E21. Au cours de cette étape, pour chaque deuxième image à afficher le module de traitement met en oeuvre une étape de calcul E211 de la deuxième image à afficher par application, à au moins une partie de l'image I1 correspondant à l'état courant, du ou des algorithmes de traitements représentés par les transitions du graphe entre l'état courant et un deuxième état du graphe accessible à partir de l'état courant. Le module de traitement calcule ainsi l'image associée à ce deuxième état, fils de l'état courant.

Le module de traitement peut ensuite afficher lors d'une troisième étape d'affichage E213 chaque deuxième image calculée dans une des deuxièmes zones d'affichage ZA2.

Dans un premier mode de mise en oeuvre, le module de traitement peut déterminer préalablement à l'étape de calcul 211 lors d'une première étape de détermination E210 les deuxièmes images à calculer et à afficher. Selon une première variante, les deuxièmes images à calculer et à afficher sont déterminées en fonction de préférences de l'utilisateur. L'utilisateur peut ainsi avoir indiqué préalablement quels traitements d'image il veut se voir proposer en priorité. L'utilisateur peut également avoir enregistré un ou plusieurs traitements favoris correspondant chacun à une série de transitions dans le graphe présentant un intérêt particulier pour l'utilisateur. Pour définir un tel traitement favori, lors d'une mise en oeuvre précédente du procédé selon l'invention, l'utilisateur sélectionne un traitement ou une série de traitements pour une image et requiert la mémorisation de ce traitement ou de cette série de traitements sous forme d'un traitement favori. Le module de traitement enregistre alors la série de transitions parcourues dans le graphe depuis un état de départ correspondant à une image d'origine. Lors des mises en oeuvre ultérieures du procédé sur d'autres images, le module de traitement affiche alors dans une deuxième zone d'affichage une deuxième image obtenue par l'application à la première image du traitement favori mémorisé. Ceci permet à un utilisateur d'appliquer de façon répétée à plusieurs images à traiter une même série de traitements sans avoir à sélectionner à chaque fois un par un les traitements de cette série. Selon une deuxième variante, les deuxièmes images à calculer et à afficher sont déterminées automatiquement à partir d'un historique des traitements d'image utilisés précédemment, par exemple par l'utilisateur sur d'autres images lors de mises en oeuvre précédentes du procédé d'affichage selon l'invention.

Dans un deuxième mode de mise en oeuvre, le module de traitement peut calculer davantage de deuxièmes images que le nombre de deuxièmes zones d'affichages ZA2 puis déterminer quelles images parmi ces images calculées doivent être affichées dans les deuxièmes zones d'affichage ZA2. Le module de traitement peut par exemple calculer un ensemble de deuxièmes images obtenues par l'application à la première image d'un ensemble prédéfini de traitements, voire de tous les traitements connus du module de traitement. Le module de traitement peut ensuite sélectionner des deuxièmes images à afficher dans les deuxièmes zones d'affichage parmi les deuxièmes images calculées lors d'une deuxième étape de détermination E212 en fonction des différences entre ces images calculées et entre ces images calculées et la première image. Par exemple le module de traitement peut sélectionner les deuxièmes images présentant le plus de différence par rapport à la première image et/ou présentant le plus de différences entre elles. Les traitements proposés à l'utilisateur présentent alors chacun un effet bien visible et/ou bien différencié de ceux des autres traitements proposés, évitant ainsi de proposer à l'utilisateur plusieurs traitements aux résultats similaires.

Par ailleurs, une transformation appliquée à la première image par l'utilisateur du système d'affichage peut également être appliquée à chaque deuxième image affichée dans une desdites deuxièmes zones d'affichage.

L'utilisateur peut par exemple décider de zoomer dans la première image afin d'afficher dans la première zone d'affichage un agrandissement d'une sous-partie de la première image, par exemple une sous-partie comportant un visage, une empreinte digitale ou un détail particulier de tels éléments. Le zoom appliqué par l'utilisateur est alors appliqué également à chaque deuxième image affichée dans les deuxièmes zones d'affichage.

Si la première image affichée dans la première zone d'affichage est une sous-partie d'une image d'origine plus grande, l'utilisateur peut aussi commander une translation de la sous-partie de l'image d'origine affichée comme première image, c'est-à-dire déplacer la première zone d'affichage dans l'image d'origine. La même translation est alors appliquée à chaque deuxième image affichée dans une deuxième zone d'affichage. Chaque deuxième image est alors recalculée en appliquant le traitement relatif à cette deuxième image à au moins une partie de la nouvelle sous-partie de l'image d'origine affichée dans la première zone d'affichage.

Lors d'une première étape de sélection E4, l'utilisateur sélectionne une deuxième zone d'affichage dans laquelle est affichée au moins une partie d'une image, dite image sélectionnée, correspondant à un deuxième état du graphe, fils de l'état courant, par exemple en cliquant sur la deuxième zone d'affichage sélectionnée.

Le module de traitement, lors d'une quatrième étape d'affichage E41, affiche dans la première zone d'affichage l'image sélectionnée, obtenue en appliquant à au moins une partie de l'image correspondant à l'état courant, c'est-à-dire de la première image I1, le traitement relatif à la deuxième image affichée dans la deuxième zone sélectionnée, c'est-à-dire le ou les algorithmes de traitement représentés par les transitions entre l'état courant et le deuxième état correspondant à l'image sélectionnée. Le traitement sélectionné de cette manière par l'utilisateur est ainsi appliqué à la première image. L'état correspondant à l'image sélectionnée devient alors le nouvel état courant.

Lors d'une cinquième étape d'affichage E42, le module de traitement affiche au moins une deuxième image dans une desdites deuxièmes zones d'affichage en mettant en oeuvre l'étape d'affichage de deuxièmes images relativement au deuxième état considéré comme nouvel état courant E21. Les deuxièmes zones d'affichage sont ainsi mises à jour relativement à ce nouvel état courant pour proposer à l'utilisateur de nouveaux traitements d'image à appliquer à l'image traitée affichée dans la première zone d'affichage ZA1.

Selon un mode de mise en oeuvre, lors d'une seconde étape de sélection E5, l'utilisateur peut sélectionner dans la première image une première zone de sélection définissant la zone de la première image affichée, après application d'un traitement, dans chaque deuxième zone d'affichage. Chaque deuxième image affichée dans une desdites deuxièmes zones d'affichage lors de la deuxième étape d'affichage E2 est alors obtenue par application à la première zone de sélection de la première image d'un traitement d'image. Un exemple d'un tel mode de réalisation est représenté en figure 5 sur laquelle chaque deuxième zone d'affichage ZA2 affiche une deuxième image obtenue par l'application d'un traitement à la sous-zone ZA1-1 de la première image I1. L'utilisateur peut ainsi sélectionner une zone d'intérêt particulière de la première image à afficher dans les deuxièmes zones d'affichage pour faciliter la sélection d'un traitement d'image.

Selon un autre mode de mise en oeuvre, lors d'une troisième étape de sélection E6, l'utilisateur peut sélectionner dans la première image une deuxième zone de sélection définissant une zone de visualisation à laquelle est appliqué un traitement d'image lorsque l'utilisateur survole une deuxième zone d'affichage ou sélectionne un traitement. Le traitement sélectionné ou relatif à la deuxième image survolée est alors appliqué respectivement lors de la première étape de sélection E4 ou lors de l'étape de prévisualisation E3 à la première image dans la deuxième zone de sélection de la première zone d'affichage. Ceci permet à l'utilisateur d'accélérer le rendu de la visualisation par le module de traitement en ne lui demandant d'appliquer l'algorithme de traitement que sur une zone d'intérêt de la première image.

Selon une variante de mise en œuvre, le calcul des deuxièmes images et des images pouvant être obtenues par l'application d'un traitement à tout ou partie de la première image est réalisé en tâche de fond, sans attendre que l'utilisateur survole une deuxième zone d'affichage ou sélectionne un traitement. Ainsi, les images à afficher suite à une action de l'utilisateur sont au moins en partie calculées avant que l'utilisateur ne réalise cette action et l'affichage à l'écran de ces nouvelles images est accéléré.

Une telle solution permet ainsi à l'utilisateur de comparer facilement différents algorithmes de traitement, de prévisualiser le résultat de leur application à une image à traiter, de sélectionner un ou plusieurs traitements en un nombre limité d'opérations et de les appliquer à une série d'images à traiter.

## Revendications

1. Procédé d'affichage d'images mis en œuvre par un module de traitement de données susceptible d'être connecté à un système d'affichage comprenant au moins deux zones d'affichage (ZA1, ZA2),
ledit procédé d'affichage d'images comprenant les étapes suivantes :
- affichage (E1) d'une première image (I1) dans une première zone d'affichage (ZA1) dudit système d'affichage,
- affichage (E2) d'au moins une deuxième image (I2) obtenue par application à la première image (I1) d'au moins un algorithme de traitement d'image, chaque deuxième image (I2) étant affichée dans une deuxième zone (ZA2) dudit système d'affichage,
ledit procédé d'affichage d'images étant **caractérisé en ce qu'**il comprend en outre :
- tant qu'une desdites deuxièmes zones (ZA2) affichant une desdites deuxièmes images (I2) est survolée par un pointeur, un affichage (E3), dans tout ou partie de la première zone d'affichage (ZA1), d'au moins une partie de ladite première image à laquelle est appliqué l'au moins un algorithme de traitement permettant d'obtenir ladite deuxième image survolée (I2),
le module de traitement de données utilisant un modèle de données implémenté sous forme d'un graphe dont chaque état correspond à une image et chaque transition entre un premier état correspondant à une première image et un deuxième état correspondant à une deuxième image représente un algorithme de traitement d'image à appliquer à la première image pour obtenir la deuxième image,
la première image (I1) affichée dans la première zone d'affichage (ZA1) correspondant à un premier état du graphe dit état courant,
ladite étape d'affichage (E2) d'au moins une deuxième image (I2) comprend une étape d'affichage de deuxièmes images relativement à un état courant (E21) dans laquelle, pour chaque deuxième image (I2) à afficher, le module de traitement de données :
- calcule (E211) une deuxième image (I2) par application, à au moins une partie de l'image (I1) correspondant à l'état courant, d'au moins un algorithme de traitement représenté par au moins une transition du graphe entre l'état courant et un deuxième état du graphe accessible à partir de l'état courant; et
- affiche (E213) la deuxième image calculée dans une desdites deuxièmes zones d'affichage,
et **en ce que** lors de la sélection par un utilisateur du système d'affichage d'une deuxième zone d'affichage (ZA2) dans laquelle est affichée au moins une partie d'une image correspondant à un deuxième état du graphe, le module de traitement :
- affiche (E41) dans la première zone d'affichage (ZA1) une image obtenue en appliquant, à au moins une partie de l'image correspondant à l'état courant, les algorithmes de traitement représentés par les transitions entre l'état courant et le deuxième état,
- affiche (E42) au moins une deuxième image dans lesdites deuxièmes zones d'affichage (ZA2) en mettant en oeuvre ladite étape d'affichage de deuxièmes images relativement au deuxième état considéré comme nouvel état courant pour mettre à jour les deuxièmes zones d'affichage (ZA2) relativement à ce nouvel état courant pour proposer à l'utilisateur de nouveaux traitements d'image à appliquer à l'image traitée affichée dans la première zone d'affichage (ZA1).

2. Procédé d'affichage selon l'une des revendications précédentes dans lequel, l'affichage (E2) d'au moins une deuxième image sur ledit système d'affichage, comprend préalablement une étape de détermination (E210) desdites deuxièmes images à afficher sur ledit système d'affichage.

3. Procédé d'affichage selon la revendication précédente dans lequel, lesdites deuxièmes images à afficher sont déterminées (E210) en fonction de préférences utilisateurs et/ou à partir d'un historique des algorithmes de traitement d'image utilisés précédemment.

4. Procédé d'affichage selon l'une des revendications 2 ou 3 dans lequel, lesdites deuxièmes images à afficher sont déterminées (E210) en calculant un ensemble de deuxièmes images obtenues par application à ladite première image d'au moins un algorithme de traitement d'images et en sélectionnant des deuxièmes images parmi l'ensemble des deuxièmes images calculées en fonction des différences entre ces images calculées et, entre ces images calculées et la première image.

5. Procédé d'affichage selon l'une des revendications précédentes comprenant en outre, la sélection (E5) par l'utilisateur du système d'affichage d'une première zone de sélection dans la première image (I1), chaque deuxième image affichée dans une desdites deuxièmes zones d'affichage étant obtenue par application à la première zone de sélection de la première image d'au moins un algorithme de traitement d'image.

6. Procédé d'affichage selon la revendication 5 comprenant en outre, la sélection (E6) par l'utilisateur du système d'affichage d'une deuxième zone de sélection dans la première image (I1), et dans lequel l'au moins un algorithme de traitement appliqué pour obtenir la deuxième image survolée est appliqué à la première image dans la deuxième zone de sélection de la première zone d'affichage.

7. Procédé d'affichage selon l'une des revendications précédentes dans lequel, une transformation appliquée à la première image par un utilisateur du système d'affichage est également appliquée à chaque deuxième image affichée dans une desdites deuxièmes zones d'affichage.

8. Procédé d'affichage selon la revendication précédente dans lequel, ladite transformation comprend un zoom dans la première image.

9. Procédé d'affichage selon la revendication 7 dans lequel, ladite première image étant une sous-partie d'une image d'origine, ladite transformation comprend une translation de la sous partie de l'image d'origine affichée comme première image.

10. Produit programme d'ordinateur comprenant des instructions de code de programme pour l'exécution des étapes du procédé d'affichage selon l'une quelconque des revendications précédentes lorsque ledit programme est exécuté sur un ordinateur.

11. Module de traitement de données configuré pour exécuter les étapes de procédé selon l'une quelconque des revendications 1 à 9.

12. Système d'affichage comprenant un module de traitement de données selon la revendication précédente et au moins un système d'affichage.

## Patentansprüche

1. Verfahren zur Anzeige von Bildern, das von einem Datenverarbeitungsmodul durchgeführt wird, das imstande ist, mit einem Anzeigesystem verbunden zu sein, umfassend mindestens zwei Anzeigezonen (ZA1, ZA2),
wobei das Verfahren zur Anzeige von Bildern die folgenden Schritte umfasst:
- Anzeigen (E1) eines ersten Bildes (I1) in einer ersten Anzeigezone (ZA1) des Anzeigesystems,
- Anzeigen (E2) mindestens eines zweiten Bildes (I2), erhalten durch Anwendung von mindestens einem Bildbearbeitungsalgorithmus auf das erste Bild (I1), wobei jedes zweite Bild (I2) in einer zweiten Zone (ZA2) des Anzeigesystems angezeigt wird,
wobei das Verfahren zur Anzeige von Bildern **dadurch gekennzeichnet ist, dass** es ferner umfasst:
- solange eine der zweiten Zonen (ZA2), die eins von den zweiten Bilder (I2) anzeigen, von einem Pointer überflogen wird, eine Anzeige (E3) in der gesamten oder in einem Teil der ersten Anzeigezone (ZA1) mindestens eines Teils des ersten Bildes, auf das der mindestens eine Bearbeitungsalgorithmus angewendet wird, gestattet, das überflogene zweite Bild (I2) zu erhalten,
wobei das Datenverarbeitungsmodul ein Datenmodell verwendet, das in Form eines Graphs implementiert ist, von dem jeder Zustand einem Bild entspricht und jeder Übergang zwischen einem ersten Zustand, der einem ersten Bild entspricht, und einem zweiten Zustand, der einem zweiten Bild entspricht, einen Bildbearbeitungsalgorithmus darstellt, der auf das erste Bild anzuwenden ist, um das zweite Bild zu erhalten,
das erste Bild (I1), das in der ersten Anzeigezone (ZA1) angezeigt wird, einem ersten Zustand des Graphs entspricht, bezeichnet als laufender Zustand,
der Anzeigeschritt (E2) von mindestens einem zweiten Bild (I2) einen Anzeigeschritt zweiter Bilder relativ zu einem laufenden Zustand (E21) umfasst, bei dem für jedes anzuzeigende zweite Bild (I2) das Datenverarbeitungsmodul:
- ein zweites Bild (I2) durch Anwenden, auf mindestens einen Teil des Bildes (I1), das dem laufenden Zustand entspricht, mindestens eines Bearbeitungsalgorithmus berechnet (E211), der durch mindestens einen Übergang des Graphs zwischen dem laufenden Zustand und einem zweiten Zustand des Graphs dargestellt wird, der ab dem laufenden Zustand erreichbar ist; und
- das berechnete zweite Bild in einer der zweiten Anzeigezonen anzeigt (E213),
und dass bei der Auswahl, durch einen Benutzer des Anzeigesystems, einer zweiten Anzeigezone (ZA2), in der mindestens ein Teil eines Bildes angezeigt wird, das einem zweiten Zustand des Graphs entspricht, das Bearbeitungsmodul:
- in der ersten Anzeigezone (ZA1) ein Bild anzeigt (E41), das durch Anwenden auf mindestens einen Teil des Bildes, das dem laufenden Zustand entspricht, der von den Übergängen zwischen dem laufenden Zustand und dem zweiten Zustand dargestellten Bearbeitungsalgorithmen erhalten wird,
- mindestens ein zweites Bild in den zweiten Anzeigezonen (ZA2) durch Durchführen des Anzeigenschritts zweiter Bilder relativ zum zweiten Zustand, der als neuer laufender Zustand betrachtet wird, anzeigt (E42), um die zweiten Anzeigezonen (ZA2) relativ zu diesem neuen laufenden Zustand zu aktualisieren, um dem Benutzer neue Bildbearbeitungen vorzuschlagen, die auf das bearbeitete, in der ersten Anzeigezone (ZA1) angezeigte Bild anwendbar sind.

2. Anzeigeverfahren nach einem der vorangehenden Ansprüche, wobei die Anzeige (E2) von mindestens einem zweiten Bild auf dem Anzeigesystem zuvor einen Schritt des Bestimmens (E210) der auf dem Anzeigesystem anzuzeigenden zweiten Bilder umfasst.

3. Anzeigeverfahren nach vorangehendem Anspruch, wobei die anzuzeigenden zweiten Bilder in Abhängigkeit von Benutzereinstellungen und/oder auf der Basis eines Verlaufs der zuvor verwendeten Bildbearbeitungsalgorithmen bestimmt werden (E210).

4. Anzeigeverfahren nach einem der Ansprüche 2 oder 3, wobei die anzuzeigenden zweiten Bilder durch Berechnen einer Menge zweiter Bilder, erhalten durch Anwenden von mindestens einem Bildbearbeitungsalgorithmus auf das erste Bild und durch Auswählen der zweiten Bilder aus der Menge der zweiten, in Abhängigkeit von den Unterschieden zwischen diesen berechneten Bildern und zwischen diesen berechneten Bildern und dem ersten Bild berechneten Bilder, bestimmt werden (E210).

5. Anzeigeverfahren nach einem der vorangehenden Ansprüche, umfassend ferner das Auswählen (E5), durch den Benutzer des Anzeigesystems, einer ersten Auswahlzone im ersten Bild (I1), wobei jedes zweite Bild, das in einer der zweiten Anzeigezonen angezeigt wird, durch Anwenden, auf die erste Auswahlzone des ersten Bildes, mindestens eines Bildbearbeitungsalgorithmus erhalten wird.

6. Anzeigeverfahren nach Anspruch 5, umfassend ferner das Auswählen (E6), durch den Benutzer des Anzeigesystems, einer zweiten Auswahlzone im ersten Bild (I1), und wobei der mindestens eine zum Erhalten des überflogenen zweiten Bildes angewendete Bearbeitungsalgorithmus auf das erste Bild in der zweiten Auswahlzone der ersten Anzeigezone angewendet wird.

7. Anzeigeverfahren nach einem der vorangehenden Ansprüche, wobei eine auf das erste Bild von einem Benutzer des Anzeigesystems angewendete Transformation ebenfalls auf jedes zweite Bild angewendet wird, das in einer der zweiten Anzeigezonen angezeigt wird.

8. Anzeigeverfahren nach vorangehendem Anspruch, wobei die Transformation ein Zoom im ersten Bild umfasst.

9. Anzeigeverfahren nach Anspruch 7, wobei, wobei das erste Bild ein Subteil eines Originalbildes ist, die Transformation eine Verschiebung des Subteils des als erstes Bild angezeigten Originalbildes umfasst.

10. Rechnerprogrammprodukt, umfassend Programmcodebefehle für die Ausführung der Schritte des Anzeigeverfahrens nach einem der vorangehenden Ansprüche, wenn das Programm auf einem Rechner ausgeführt wird.

11. Datenverarbeitungsmodul, das ausgelegt ist, um die Schritte des Verfahrens nach einem der Ansprüche 1 bis 9 auszuführen.

12. Anzeigesystem, umfassend ein Datenverarbeitungsmodul nach vorangehendem Anspruch und mindestens ein Anzeigesystem.

## Claims

1. A method for displaying images implemented by a data processing module able to be connected to a display system comprising at least two display zones (ZA1, ZA2),
said method for displaying images comprising the following steps:
- displaying (E1) a first image (I1) in a first display zone (ZA1) of said display system,
- displaying (E2) at least one second image (12) obtained by applying to the first image (I1) at least one image processing algorithm, each second image (12) being displayed in a second zone (ZA2) of said display system,
said method for displaying images being **characterised in that** it further comprises:
- as long as one of said second zones (ZA2) displaying one of said second images (12) is hovered over by a pointer, displaying (E3), in all or part of the first display zone (ZA1), at least part of said first image to which the at least one processing algorithm is applied allowing to obtain said second hovered-over image (12),
the data processing module using a data model implemented in the form of a graph, each state of which corresponds to an image and each transition between a first state corresponding to a first image and a second state corresponding to a second image represents an image processing algorithm to be applied to the first image to obtain the second image,
the first image (I1) displayed in the first display zone (ZA1) corresponding to a first state of the graph called the current state,
said step of displaying (E2) at least one second image (12) comprises a step of displaying second images relative to a current state (E21) wherein, for each second image (12) to be displayed, the data processing module:
- calculates (E211) a second image (12) by applying, to at least part of the image (I1) corresponding to the current state, at least one processing algorithm represented by at least one transition of the graph between the current state and a second state of the graph accessible from the current state; and
- displays (E213) the second image calculated in one of said second display zones,
and **in that** when selecting, by a user, the display system of a second display zone (ZA2) wherein at least part of an image corresponding to a second state of the graph is displayed, the processing module:
- displays (E41) in the first display zone (ZA1) an image obtained by applying, to at least part of the image corresponding to the current state, the processing algorithms represented by the transitions between the current state and the second state,
- displays (E42) at least one second image in said second display zones (ZA2) by implementing said step of displaying second images relative to the second state considered as a new current state to update the second display zones (ZA2) relative to this new current state to propose to the user new image processing operations to be applied to the processed image displayed in the first display zone (ZA1).

2. The display method according to one of the preceding claims wherein, the display (E2) of at least one second image on said display system, initially comprises a step of determining (E210) said second images to be displayed on said display system.

3. The display method according to the preceding claim wherein, said second images to be displayed are determined (E210) according to user preferences and/or on the basis of a history of the image processing algorithms used previously.

4. The display method according to one of claims 2 or 3 wherein said second images to be displayed are determined (E210) by calculating a set of second images obtained by applying to said first image at least one image processing algorithm and by selecting second images from the set of second images calculated according to the differences between these calculated images and, between these calculated images and the first image.

5. The display method according to one of the preceding claims further comprising, selecting (E5) the display system of a first selection zone in the first image (I1) by the user, each second image displayed in one of said second display zones being obtained by applying to the first selection zone of the first image at least one image processing algorithm.

6. The display method according to claim 5 further comprising, selecting (E6) the display system of a second selection zone in the first image (I1) by the user, and wherein the at least one processing algorithm applied to obtain the second hovered-over image is applied to the first image in the second selection zone of the first display zone.

7. The display method according to one of the preceding claims, wherein a transformation applied to the first image by a user of the display system is also applied to each second image displayed in one of said second display zones.

8. The display method according to the preceding claim, wherein said transformation comprises a zoom in the first image.

9. The display method according to claim 7 wherein, said first image being a sub-part of an original image, said transformation comprises a translation of the sub-part of the original image displayed as the first image.

10. A computer program product comprising program code instructions for executing the steps of the display method according to any one of the preceding claims when said program is executed on a computer.

11. A data processing module configured to execute the steps of the method according to any one of claims 1 to 9.

12. A display system comprising a data processing module according to the preceding claim and at least one display system.
